# EUROPÄISCHE PATENTANMELDUNG

(11) **EP 2 503 114 A2**
(43) Veröffentlichungstag der Anmeldung: **26.09.2012**
(21) Anmeldenummer: 12000382.7
(22) Anmeldetag: 21.01.2012
(51) Int. Cl.: F01K 23/10, F22B 1/00, C25B 1/12

(54) **Verfahren zur Ein- und Ausspeicherung von Energie sowie Gasturbinenkraftwerk**

(30) Priorität: 22.03.2011 DE 102011014729
(71) Anmelder: RWE Power AG, 45128 Essen (DE)
(72) Erfinder: Schwendig, Frank, 51643 Gummersbach (DE); Ewers, Johannes, 50374 Erfstadt (DE)
(74) Vertreter: Polypatent

(57) **Zusammenfassung**

Die Erfindung betrifft ein Verfahren zur Ein- und Ausspeicherung von Energie unter Ausnutzung von zeitweise in einem Energieversorgungsnetz die Nachfrage übersteigenden, volatilen Energiepotentialen. Das Verfahren umfasst die adiabatische Verdichtung von Luft mittels Überschussstrom, die Speicherung der verdichteten Luft sowie den Betrieb einer Gasturbine als Verbrennungskraftmaschine unter Entnahme von Luft aus dem Speicher und unter Verwendung wenigstens eines gasförmigen Brennstoffs für die Gasturbine. Das Verfahren zeichnet sich dadurch aus, dass als gasförmiger Brennstoff für die Gasturbine Wasserstoff Verwendung findet.

## Beschreibung

Die Erfindung betrifft ein Verfahren zur Ein- und Ausspeicherung von Energie unter Ausnutzung von zeitweise in einem Energieversorgungsnetz die Nachfrage übersteigenden volatilen Energiepotentialen, umfassend die adiabatische Verdichtung von Luft, die Speicherung der verdichteten Luft sowie den Betrieb einer Gasturbine als Verbrennungskraftmaschine unter Entnahme von Luft aus dem Speicher und unter Verwendung von wenigstens einem gasförmigen Brennstoff für die Gasturbine.

Zur Bereitstellung von Strom zu Spitzenlastzeiten ist es bekannt, Druckluftspeicherkraftwerke bzw. Druckluftspeicher-Gasturbinenspeicherkraftwerke zu betreiben. Solche Kraftwerke werden auch als CAES-Kraftwerke (Compressed Air Energy Storage) bezeichnet. Dies sind Speicherkraftwerke, welche verdichtete Druckluft als Energiespeicher verwenden. Eine seit Langem erfolgreich eingesetzte Speicherkraftwerkstechnik ist das Pumpspeicherkraftwerk.

In sog. "Schwachlastzeiten", bei welchen die Stromnachfrage geringer ist als das Angebot, wird üblicherweise auf Speicherkraftwerke zurückgegriffen, beispielsweise in Form von Pumpspeicherkraftwerken oder Druckluftspeicherkraftwerken. Zu Spitzenlastzeiten kann beispielsweise die in einer Speicherkaverne gespeicherte Druckluft in einer Gasturbine entspannt werden. Diese Technologie ist verhältnismäßig aufwändig und teuer und lässt sich in der Regel nur zu kurzfristigen Regelungszwecken und zur Abdeckung von zeitlich begrenzten Lastspitzen einsetzen.

Ein zunehmender Anteil an regenerativen Energien bei der Energieerzeugung erfordert eine stärke Flexibilisierung der Stromerzeugungsanlagen, insbesondere hinsichtlich der Möglichkeit des Rückgriffs auf Energiespeicher. Bekannterweise unterliegen regenerative Energien einer gewissen Volatilität, so dass der zunehmende Anteil an regenerativen Energien bei der Stromversorgung es zunehmend schwieriger macht, eine zuverlässige und vor allen Dingen auch bedarfsorientierte, lastabhängige Stromversorgung sicherzustellen. Die grundsätzlich hierzu geeignete Pumpspeichertechnik ist nur bedingt ausbaufähig, da diese bestimmte topographische/geologische Gegebenheiten voraussetzt, die nicht immer und uneingeschränkt gegeben sind.

Grundsätzlich ist es wünschenswert, Speichertechnologien bereitzustellen, die sowohl hinsichtlich ihrer Einspeicherungs- und Stromerzeugungsleistung als auch hinsichtlich ihrer Einsatzdauer variabel sind. Ein CAES-Verfahren ist beispielsweise aus der US 6,754,592 B2 bekannt. Ähnliche Kraftwerke und Verfahren sind beispielsweise aus dem US-Patenten Nummern US 5,331,806, US 5,775,091 sowie US 4,743,516 bekannt. Die EP 2 138 678 A1 beschreibt einen Energiespeichersystem, welches eine Einrichtung zur Hochdruckelektrolyse von Wasserstoff, einen Wasserstoffspeicher und ein mit Wasserstoff betriebenes Kraftwerk umfasst.

Aus dem US-Patent 4,353,214 ist ein Energiespeichersystem zum Betreiben einer elektrischen Einrichtung bekannt, das ebenfalls nach dem CAES-Prinzip arbeitet. Das System umfasst zwei Kavernenspeicher, die Teil eines in sich vollständig geschlossenen Kreislaufs eines inerten Arbeitsfluids sind. Während einer Spitzenlastzeit wird ein Teil des verdichteten Arbeitsmediums dem Speicher entnommen, aufgeheizt und in einer einen Generator antreibenden Expansionsturbine umgesetzt beziehungsweise entspannt. Die zur Aufheizung des Arbeitsfluids benötigte Energie wird teilweise aus dem entspannten Arbeitsfluid hinter der Turbine ausgekoppelt und teilweise in einer mit Brennstoff betriebenen Brennkammer erzeugt. In der Brennkammer werden nicht inerte Brennstoffe in einer exothermen Reaktion umgesetzt, wobei das Brenngas und die Reaktionsprodukte von dem geschlossenen Kreislauf des Arbeitsfluids getrennt gehalten werden. Hinsichtlich der Einsatzdauer sowie hinsichtlich der Einspeicherungs- und Stromerzeugungsleistung ist das System gemäß US-Patent 4,353,214 nicht variabel.

Der Erfindung liegt daher die Aufgabe zugrunde, ein Verfahren der eingangs genannten Art hinsichtlich der Einspeicherungs- und Stromerzeugungsleistung als auch hinsichtlich der Einsatzdauer zu verbessern. Das umfasst die Verbesserung der Stromspeicherung und Strombereitstellung nach Leistung und Arbeit sowohl als auch die Verbesserung des Wirkungsgrades der Energiespeicherung.

Die Aufgabe wird zunächst gelöst durch ein Verfahren mit den Merkmalen des Anspruchs 1. Die Aufgabe wird weiterhin gelöst mit einem Gasturbinenspeicherkraftwerk gemäß Anspruch 11. Vorteilhafte Ausgestaltungen des Verfahrens sowie des Gasturbinenspeicherkraftwerks ergeben sich aus den Unteransprüchen.

Erfindungsgemäß ist ein Verfahren zur Ein- und Ausspeicherung von Energie unter Ausnutzung von zeitweise in einem Energieversorgungsnetz die Nachfrage übersteigenden, volatilem Energiepotential vorgesehen, umfassend die adiabatische Verdichtung von Luft, die Speicherung der verdichteten Luft sowie den Betrieb einer Gasturbine als Verbrennungskraftmaschine unter Entnahme von Luft aus dem Speicher und unter Verwendung wenigstens eines gasförmigen Brennstoffs für die Gasturbine, wobei sich das Verfahren insbesondere dadurch auszeichnet, dass als ein gasförmiger Brennstoff Wasserstoff verwendet wird.

Besonders zweckmäßig ist es, wenn das Verfahren eine Elektrolyse von Wasserstoff als Brennstoff für die Gasturbine umfasst.

Auf diese Art und Weise kann das Verfahren vollständig unabhängig von anderen fossilen Energieträgern betrieben werden. Zweckmäßigerweise umfasst das Verfahren ebenfalls eine vorzugsweise adiabatische Speicherung von Wasserstoff. Die Speicherung von Wasserstoff kann, je nach erforderlicher Speichergröße, in Stahlbehältern, Rohrleitungen oder Kugelbehältern oder in natürlichen Kavernen in geeigneter Teufe erfolgen. Vorzugsweise wird das Verfahren unter Verwendung wenigstens einer Speicherkaverne durchgeführt.

Kern des Verfahrens ist eine wirkungsgradtechnische günstige Kopplung aus Wasserstoffproduktion und -speicherung und Drucklufterzeugung und -speicherung, die eine flexible, d. h. lastabhängige, Fahrweise wenigstens einer Gasturbine ermöglicht.

Temporär und stochastisch auftretender Überschussstrom im Netz wird dazu genutzt, um parallel Wasserstoff mittels Elektrolyse zu erzeugen und nahezu adiabat zu speichern und Luft nahezu adiabat zu verdichten und nahezu adiabat zu speichern. Das Einspeichern von Wasserstoff und Luft sowie das Erzeugen von Wasserstoff und das Verdichten der Luft können parallel oder seriell erfolgen.

Leistungs- und Speichermengen der vorzugsweise gekoppelten Speicher sind so aufeinander abgestimmt, dass nach Entnahme aus den jeweiligen Speichern Wasserstoff und Luft in vorverdichteter und vorgewärmter Form als Reaktionspartner im entsprechenden Umfang und Verhältnis zur Verbrennung in einem Gasturbinenprozess zur Verfügung stehen. Ein so betriebenes Kraftwerk ist sowohl schnellstartfähig als auch schwarzstartfähig und kann je nach Betriebsweise der Gasturbine in verschiedenen Lastbereichen betrieben werden, so dass sowohl ein Spitzenlastausgleich als auch eine Ausspeicherung von Druckluft und Wasserstoff über einen längeren Zeitraum möglich ist, wie es zur Überwindung von Windflauten beispielsweise erforderlich sein kann.

Bevorzugt erfolgt die Speicherung von Wasserstoff unter Nutzung der bei der Elektrolyse und/oder Speicherung des Wasserstoffs anfallenden thermischen Energie, d. h. nahezu adiabatisch. Die bei der Elektrolyse und/oder bei der ggf. nach der Elektrolyse erforderlichen Verdichtung anfallende thermische Energie kann beispielsweise dazu verwendet werden, einen rekuperativen Wärmespeicher aufzuwärmen. Die gespeicherte Wärme kann dann zur Vorwärmung des Wasserstoffs bei der Ausspeicherung vor der Verbrennung in der Gasturbine verwendet werden.

Das erfindungsgemäße Verfahren sieht in vorteilhafter Art und Weise eine lastabhängige parallele Entnahme von Druckluft und Wasserstoff aus den jeweiligen Speichern vor. Wasserstoff und Druckluft werden als Reaktionspartner der Brennkammer einer Gasturbine in einem dem jeweiligen Betriebsfall/Lastfall entsprechenden Mengenverhältnis zugeführt, wobei Wasserstoff beispielsweise mit einem Vordruck von ca. 50 bar und einer Vorwärmtemperatur von 70°C und Luft beispielsweise mit einem Druck von 60 bar und einer Temperatur von 590°C zur Verbrennung im Gasturbinenprozess zur Verfügung stehen kann. Beide Reaktionspartner können bei Bedarf noch durch Prozessabgase weiter vorgewärmt werden.

Die Gasturbine zur Stromerzeugung umfasst die übliche Brennkammer unter Druck, eine Entspannungsturbine und einen nachgeschalteten Generator zur Stromerzeugung.

Insbesondere die Zufuhr von Wasserstoff und Druckluft, jeweils in vorgewärmter und verdichteter Form, ermöglicht bei dem erfindungsgemäßen Verfahren den Einsatz von modernen Hochleistungsgasturbinen mit höchsten Turbineneintrittstemperaturen und höchsten Wirkungsgraden sowie großen Einheitsleistungen.

Durch eine entsprechende Dosierung des Wasserstoffs bzw. durch entsprechende Einstellung des Mengenverhältnisses der Reaktanten Druckluft und Wasserstoff lässt sich insbesondere die Fahrweise der Gasturbine lastabhängig steuern, d. h. beispielsweise bei hoher Leistung mit entsprechend kurzer Betriebsdauer oder mit geringerer Leistung mit entsprechend längerer Betriebsdauer, jeweils bei gleichen Speichervolumina.

Zweckmäßigerweise wird die Abhitze der Gasturbine zur Stromerzeugung mittels eines der Gasturbine nachgeschalteten Abhitzekessels mit einem Wasser-/ Dampfkreislauf genutzt.

Erfindungsgemäß kann ein kombiniertes Gas- und Dampfturbinenverfahren (GUD-Prozess) mit einem kombinierten Wasserstoff/Luft-Energiespeicher betrieben werden. Mit einem Gasturbinen-Abhitzekessel kann auf verschiedenen Druckstufen (Hoch-, Mittel- und Niederdruck) Dampf erzeugt werden, der anschließend eine Dampfturbine mit Generator antreibt. Der Turbinenabdampf kann in einem Kondensator abgekühlt werden und als Kesselspeisewasser anschlie-βend erneut verdichtet werden.

Eine solche GUD-Fahrweise ermöglicht außerdem den Einsatz von Dampf in der Gasturbinenbrennkammer, der aus der Dampfturbine auf einem geeigneten Druckniveau abgezogen werden kann. Dieser Dampf kann teilweise Druckluft aus dem Druckluftspeicher substituieren und damit die Betriebsdauer in Abhängigkeit der Ausspeicherung verlängern.

Die Fahrweise der Gasturbine bestimmt die Methode der Abhitzenutzung. Sind die Abgastemperaturen der Gasturbine verhältnismäßig niedrig, so kann der Betrieb eines Wasserdampfkreislaufs zur Nutzung der Abgaswärme weniger sinnvoll sein. Die Gasturbinenabgaswärme kann dann z. B. zur Vorwärmung von Druckluft und Wasserstoff vor der Verbrennung dienen. Vorzugsweise findet eine Vorwärmung von Druckluft und/oder Wasserstoff jeweils über einen Gas-Gaswärmetausch mit Gasturbinenabgas statt.

Generell möglich ist zudem eine teilweise Verdichtung von abgekühltem Gasturbinenabgas, um es der Gasturbinenbrennkammer zuzuführen. Damit kann der Einsatz von Druckluft als Reaktionspartner und zur Einstellung der Gasturbineneintrittstemperatur teilweise reduziert werden. Dies kann ebenfalls die Reichweite des Druckluftspeichers verlängern.

Eine gesonderte Vorwärmung von Druckluft vor dem Einsatz in der Gasturbine kann dadurch erfolgen, dass Wasserstoff aus dem Speicher separat verbrannt und die Verbrennungswärme im Wärmetausch an die Druckluft übertragen wird oder alternativ direkt der Druckluft zugemischt wird. Beispielsweise kann hierzu eine Wasserstoffbrennereinrichtung vorgesehen sein, die wahlweise in Kopplung mit einem Gas-Gas-Wärmetauscher oder einer Mischeinrichtung zur indirekten oder direkten Vorwärmung von Druckluft vor Eintritt in die Gasturbine installiert wird.

Bei einer besonders bevorzugten Ausgestaltung des Verfahrens ist ein zusätzlicher Betrieb einer Brennstoffzelle oder einer Anordnung von Brennstoffzellen unter wenigstens teilweiser Nutzung des elektrolytisch erzeugten Wasserstoffs vorgesehen.

Weil eine Brennstoffzelle nur einen chemischen Umwandlungswirkungsgrad von etwa 50 % erreicht, kann das unter Druck stehende Brennstoffzellenabgas ohne zusätzliche Verdichtung der Gasturbinenbrennkammer zugeführt werden und beispielsweise als Reaktionspartner der Luft lastabhängig wenigstens teilweise den Wasserstoff aus einem Speicher substituieren, womit die in Abhängigkeit des Füllgrades des Wasserstoffspeichers erzielbare Betriebsdauer der Gasturbine verlängert würde.

Bei einer ebenfalls bevorzugten Variante der Erfindung ist vorgesehen, dass bei der Elektrolyse anfallender Sauerstoff der Brennkammer der Gasturbine zugeführt wird. Alternativ oder zusätzlich kann vorgesehen sein, dass der bei der Elektrolyse anfallende Sauerstoff wenigstens teilweise zur Vorwärmung von aus dem jeweiligen Speicher entnommene Luft oder entnommenen Wasserstoff verwendet wird. Beispielsweise kann der unter Druck anfallende Sauerstoff ebenfalls separat gespeichert werden, wobei die Wärme in einem vorgelagerten rekuperativen Wärmespeicher ebenfalls gespeichert werden kann. Aus dem Speicher kann über den rekuperativen Wärmespeicher vorgewärmter Sauerstoff der Brennkammer im teilweisen Ersatz von Druckluft-Sauerstoff zugeführt werden.

Die der Erfindung zugrunde liegende Aufgabe wird weiterhin gelöst durch ein Gasturbinenspeicherkraftwerk, vorzugsweise zur Durchführung des vorbeschriebenen Verfahrens, mit wenigstens einer Gasturbine als Verbrennungskraftmaschine, umfassend wenigstens eine Brennkammer sowie wenigstens eine der Brennkammer nachgeschaltete Entspannungsturbine mit wenigstens einem Druckluftspeicher und Mitteln zur Verdichtung und Einspeicherung von Luft in den Druckluftspeicher, sowie mit wenigstens einer Druckluftspeiseleitung von dem Druckluftspeicher an die Gasturbine, wobei sich das Gasturbinenspeicherkraftwerk durch wenigstens einen Wasserstoffspeicher und wenigstens eine Wasserstoffspeiseleitung zu der Gasturbine auszeichnet, wobei die Druckluftspeiseleitung und die Wasserstoffspeiseleitung eine parallele Zufuhr von Wasserstoff und Druckluft an die Gasturbine ermöglichen.

Das Gasturbinenspeicherkraftwerk umfasst vorzugsweise eine Einrichtung zur Elektrolyse von Wasserstoff. Als Elektrolysetechnik kommt beispielsweise die Niedertemperatur-PEM-Elektrolyse (Polymer Elektrolyte Membrane) in Betracht. Die Elektrolyse kann unter Druck stattfinden, beispielsweise bei etwa 60 bar, so dass eine Verdichtung des Wasserstoffs für die anschließende Speicherung unter Druck eingespart werden kann.

Der Wasserstoffspeicher kann als Speicherkaverne ausgebildet sein, alternativ kommen allerdings auch Stahlbehälter in Form von Rohrleitungen oder Kugelbehältern in Betracht.

Zweckmäßigerweise ist dem Wasserstoffspeicher wenigstens ein rekuperativer Wärmespeicher nachgeschaltet.

Bei einer bevorzugten und zweckmäßigen Variante des Gasturbinenspeicherkraftwerks gemäß der Erfindung ist vorgesehen, dass die Gasturbine keinen Verdichterteil umfasst. Ein solcher Verdichterteil ist entbehrlich, da das eingespeicherte Gas, d. h. sowohl die eingespeicherte Druckluft als auch der eingespeicherte Wasserstoff, bereits in verdichteter Form vorliegen.

Eine Variante des Gasturbinenspeicherkraftwerks gemäß der Erfindung zeichnet sich dadurch aus, dass die Gasturbine mit einem Wasser-/Dampfkreislauf einer Dampfturbine thermisch gekoppelt ist, beispielsweise über einen Abhitzekessel, der mit dem Abgas der Gasturbine beheizt wird.

Der Gasturbine kann zusätzlich oder alternativ wenigstens eine Brennstoffzelle vorgeschaltet sein.

Die vorstehend beschriebene Kraftwerkskonfiguration ermöglicht eine weitestgehende Flexibilität bei der Nutzung, d. h. bei der Zwischenspeicherung volatiler Energien einerseits, deren Anteil durch die zunehmende Einspeisung von regenerativen Energien in das Stromnetz stetig erhöht wird, wie auch bei der Aktivierung der eingespeicherten Energie zum Ausgleich von kurz wie auch länger dauernden Leistungsunterdeckungen im Netz andererseits.

Ein Ausführungsbeispiel gemäß der Erfindung wird nachstehend anhand eines schematischen Fließbilds erläutert werden.

Das dargestellte Kraftwerk umfasst eine Gasturbinenbrennkammer 1, nachstehend der Einfachheit halber als Brennkammer bezeichnet, eine Entspannungsturbine 2, die Teil der Gasturbine ist, und einen Generator 3 zwecks Stromerzeugung. Eine erste Speicherkaverne 4 als Wasserstoffspeicher ist über eine Wasserstoffspeiseleitung 5 an die Brennkammer 1 angeschlossen. Eine zweite Speicherkaverne 6 als Druckluftspeicher ist über eine Druckluftspeiseleitung 7 ebenfalls an die Brennkammer 1 der Gasturbine angeschlossen. Wie vorstehend erwähnt, kann ein weiterer Speicher für den bei der Elektrolyse anfallenden Sauerstoff vorgesehen sein. Ein solcher Speicher ist der Einfachheit halber in das beigefügte Anlagenschema nicht eingezeichnet. Diesen Speicher kann beispielsweise ein rekuperativer Wärmespeicher vorgeschaltet sein, der die bei der Einspeicherung anfallende Wärme (Verdichtungswärme) aufnimmt und bei Zufuhr von Sauerstoff an die Brennkammer 1 der Gasturbine dem Sauerstoff wieder aufgibt.

Zu Zwecken der Veranschaulichung wird hier im Folgenden nur jeweils auf eine Speicherkaverne zur Speicherung von Wasserstoff und Druckluft sowie auf jeweils eine Speiseleitung zur Zufuhr des Brennstoffs an die Brennkammer 1 der Gasturbine Bezug genommen. Dies ist grundsätzlich so zu verstehen, dass mehrere Speicherkavernen sowie Speiseleitungen vorgesehen sein können. Ebenfalls nicht dargestellt sind etwa vorhandene Misch- und Regelbatterien/Armaturen.

Der ersten Speicherkaverne 4 ist eine Wasserstoffelektrolyse 8 mit anschließender Aufbereitung vorgeschaltet, der zweiten Speicherkaverne 6 ist ein mehrstufiger Luftverdichter 9 vorgeschaltet.

Die Anordnung umfassend die Wasserstoffelektrolyse 8, die Luftverdichter 9 sowie die Speicherkavernen 4, 5, die Brennkammer 1, die Entspannungsturbine 2 und den Generator 3 stellt die Grundkonfiguration des erfindungsgemäß kombinierten Druckluft-/Wasserstoffspeicher-Gasturbinenspeicherkraftwerks gemäß der Erfindung dar.

Aus den Speicherkavernen 4 und 6 werden parallel Wasserstoff und Druckluft als Reaktionspartner über entsprechende Speiseleitungen 5 und 7 der Brennkammer 1 der Gasturbine unter Druck und entsprechend vorgewärmt zugeführt. Im teilweisen Austausch mit Druckluft kann auch der bei der Elektrolyse anfallende und gespeicherte Sauerstoff über einen zuvor erwähnten rekuperativen Wärmespeicher der Brennkammer zugeführt werden. Das in der Brennkammer 1 erzeugte Heißgas wird in der Entspannungsturbine 2 entspannt, welche wiederum den Generator 3 treibt.

Die Ein- und Ausspeisung des Wasserstoffs aus der Wasserstoffelektrolyse 8 erfolgt über einen ersten rekuperativen Wärmespeicher 10, der die bei der Wasserstoffelektrolyse 8 anfallende thermische Energie oder die bei einer der Wasserstoffelektrolyse 8 optional nachgeschalteten Wasserstoffverdichtung anfallende thermische Verdichtungsenergie beim Einspeisen in die erste Speicherkaverne 4 aufnimmt und beim Ausspeisen des Wasserstoffs aus der ersten Speicherkaverne 4 an die Brennkraftmaschine 1 wieder abgibt, so dass das Ein- und Ausspeichern des Wasserstoffs quasi adiabatisch erfolgt. Der Wasserstoff kann beispielsweise mittels einer Niedertemperatur-PEM-Elektrolyse unter Druck erzeugt worden sein, so dass dieser hinter der Wasserstoffelektrolyse 8 mit einem Druck von etwa 60 bar und einer Temperatur von etwa 100°C vorliegt. Mit diesem Druck wird der Wasserstoff in die erste Speicherkaverne 4 eingespeist. Beim Ausspeisen aus der ersten Speicherkaverne 4 kann der Wasserstoff hinter dem ersten Wärmespeicher 10 mit einer Temperatur von etwa 70°C und einem Druck von 40 bis 55 bar verfügbar sein. Wie vorstehend bereits erwähnt, wird die Wasserstoffelektrolyse 8 mit Überschussstrom in Schwachlastzeiten des Stromnetzes betrieben. In gleicher Art wird der Luftverdichter 9 betrieben, der zwei Verdichterstufen 9a, 9b umfasst. Die Druckluft wird beispielsweise hinter der zweiten Verdichterstufe 9b mit einer Temperatur von etwa 620°C bei einem Druck von 75 bar über einen zweiten rekuperativen Wärmespeicher 11 in die zweite Speicherkaverne 6 eingespeist sowie über den zweiten Wärmespeicher wieder ausgespeist. In der Druckluftspeiseleitung 7 kann die Druckluft beispielsweise mit einem Druck von etwa 50 bis 70 bar bei einer Temperatur von etwa 590°C vorliegen. Beide Reaktanten, d. h. sowohl Wasserstoff als auch Druckluft, werden in einem lastabhängigen Mischungsverhältnis parallel aus den Speicherkavernen 4 und 6 entnommen und der Brennkammer 1 zwecks Verbrennung zugeführt.

Das Gasturbinenspeicherkraftwerk gemäß dem beschriebenen Ausführungsbeispiel umfasst weiterhin wenigstens eine Brennstoffzelle 12 oder Brennstoffzellenanordnung, die mit einem aus der Wasserstoffspeiseleitung 5 abgezweigten Wasserstoffteilstrom 13 beschickt wird. Dieser Wasserstoffteilstrom 13 wird in der Brennstoffzelle 12 in bekannter Art und Weise chemisch umgesetzt, unter Erzeugung von elektrischem Strom. Das verhältnismäßig wasserstoffreiche Brennstoffzellenabgas 14 wird wiederum der Brennkammer 1 zugeführt. Der Brennstoffzellenprozess wird beispielsweise im Druckbetrieb durchgeführt. Die Brennstoffzellenanordnung umfasst die üblichen Versorgungseinrichtungen und die erforderliche Stromumwandlung. Die Zufuhr von wasserstoffreichem Brennstoffzellenabgas 14 an die Brennkammer 1 reduziert wiederum den direkten Einsatz von Wasserstoff und Druckluft aus den Speichern und verlängert damit die Speicherverfügbarkeit bzw. Speicherreichweite.

Der Entspannungsturbine 2 ist ein Abhitzekessel 15 nachgeschaltet, in welchem Wasser zu Dampf auf verschiedenen Druckstufen in bekannter Art und Weise erhitzt wird. Mit dem Wasser-/Dampfkreislauf des Abhitzekessels 15 wird wiederum eine Dampfturbine 16 betrieben, welche einen Generator 17 treibt. Die Dampfturbine 16 kann alternativ auf einer Welle mit dem Generator 3 angeordnet sein bzw. auf die Welle des Generators 3 wirken.

Mit 18 ist eine Anzapfdampfleitung bezeichnet, über die Anzapfdampf aus der Dampfturbine 16 an die Brennkammer 1 der Gasturbine geführt werden kann. Der Anzapfdampf kann teilweise anstelle von Druckluft als Reaktionspartner des Wasserstoffs und zur Einstellung der erforderlichen Gasturbineneintrittstemperatur in der Brennkammer 1 der Gasturbine eingesetzt werden.

Optional kann als Ersatz oder auch als Teilersatz von Wasserstoff auch Erdgas in der Brennkammer 1 umgesetzt werden.

Optional kann zur Einstellung der Gasturbineneintrittstemperatur in der Brennkammer neben Überschussdruckluft und Wasserdampf auch abgekühltes Gasturbinenabgas nach dem Abhitzekessel 15 mit einem Verdichter auch den erforderlichen Druck gebracht und der Brennkammer 1 zugeführt werden. Auch kann zu diesem Zweck Stickstoff beispielsweise aus einer Luftzerlegungsanlage verdichtet und der Brennkammer 1 zugeführt werden. Damit kann der Einsatz von Druckluft teilweise reduziert und die Reichweite des Druckluftspeichers verlängert werden.

Mit 19 sind jeweils Gasvorwärmer bezeichnet, die beispielsweise mit Rauchgas aus dem Abhitzekessel 15 als Wärmeträgermedium beschickt werden können.

Ebenfalls optional kann eine gesonderte Vorwärmung von Druckluft vor dem Einsatz in der Gasturbine dadurch erfolgen, dass Wasserstoff aus der Speiseleitung 5 entnommen und in einem separaten Gasbrenner mit angekoppelten Gas-Gas-Wärmetauschern verbrannt wird, sodass im Wärmetausch die Abgaswärme zur weiteren Vorwärmung der Druckluft dienen kann oder alternativ ohne Wärmetauschersystem direkt der Druckluft zugemischt wird. Diese Technik kann vor allem dann von Vorteil sein, wenn im Teillastfall die Gasturbine ohne Wasserstoffverbrennung in der Brennkammer 1 betrieben wird und nur die vorgewärmte Druckluft entspannt wird.

Mit der vorstehend beschriebenen Verschaltung lässt sich das Kraftwerk unter verschiedenen Lastzuständen fahren.

Bei vollem Einsatz aller Stromerzeugungseinheiten, können die Gasturbine und die Dampfturbine bei voller GUD-Kopplung unter Volllast betrieben werden. Ebenso wird die Brennstoffzelle 12 unter Volllast gefahren. Außerdem erfolgt zusätzlich eine Einkopplung von Anzapfdampf aus dem Wasser-/Dampfkreislauf des Abhitzekessels 15 in die Brennkammer 1. Gegebenenfalls wird eine weitere Vorwärmung der aus den Speicherkavernen 4 und 6 entnommenen Stoffströme über die mit Rauchgas betriebenen Gasvorwärmer 19 betrieben. Eine solche Fahrweise erfordert den maximalen Wasserstoff- und Luftbedarf pro Zeiteinheit und ergibt die maximale Stromausbeute. Die Erzeugungsdauer ist abhängig von den Speichervolumina der Speicherkavernen 4 und 6. Auch kann aus einem nicht dargestellten Sauerstoffspeicher über den zugehörigen Wärmespeicher vorgewärmter Sauerstoff der Brennkammer zugeführt werden. Zusätzlich können abgekühltes Gasturbinenabgas oder Stickstoff, beispielsweise aus einer Luftzerlegungsanlage, auf Druck gebracht und der Brennkammer zugeführt werden.

Eine Teillastfahrweise des Gasturbinenspeicherkraftwerks kann beispielsweise auch ohne Betrieb der Brennstoffzelle 12 und ohne Dampfeinkopplung in die Brennkammer 1 erfolgen. Naturgemäß werden so die Gasturbine und die gekoppelte Dampfturbine 16 unter Teillast gefahren, wodurch sich ein geringerer Wasserstoff- und Luftbedarf pro Zeiteinheit einstellt. Das Gasturbinenspeicherkraftwerk kann mit vorgegebener Speicherkapazität bei geringerer Erzeugungsleistung über einen längeren Zeitraum betrieben werden. Bei einer Minimallastfahrweise der Gasturbine ohne angekoppelten Wasser-/Dampfprozess, d. h. bei Nichtbetrieb der Dampfturbine 16, kann über die Wasserstoffumsetzung in der Brennkammer 1 nur eine verhältnismäßig geringe Temperaturanhebung der Luft zur anschließenden Entspannung in der Entspannungsturbine 2 erfolgen. Diese Fahrweise benötigt den geringsten Wasserstoffeinsatz, was eine entsprechende Streckung des Speichervorrats zur Folge hat.

Grundsätzlich ist die Anlagenverschaltung so gewählt, dass die Anordnung, bestehend aus Brennkammer 1 und Entspannungsturbine 2, auch ohne Einsatz der Brennkammer 1 und somit auch ohne Wasserstoffeinsatz betrieben werden kann. Die Gasturbine arbeitet in diesem Betriebszustand des Gasturbinenspeicherkraftwerks als reine Entspannungsturbine für Druckluft.

Schließlich kann das Gasturbinenspeicherkraftwerk grundsätzlich mit oder ohne Brennstoffzelle 12 betrieben werden.

Eine Dampfeinkopplung von Anzapfdampf in die Brennkammer 1 ist ebenfalls optional.

Wasserstoffspeicher und Druckluftspeicher werden abhängig von der gewünschten Fahrweise des Gasturbinenspeicherkraftwerks dimensioniert.

### Bezugszeichenliste

- 1: Brennkammer
- 2: Entspannungsturbine
- 3: Generator
- 4: Erste Speicherkaverne
- 5: Wasserstoffspeiseleitung
- 6: Zweite Speicherkaverne
- 7: Druckluftspeiseleitung
- 8: Wasserstoffelektrolyse
- 9: Luftverdichter
- 9a: erste Verdichterstufe
- 9b: zweite Verdichterstufe
- 10: erster Wärmespeicher
- 11: zweiter Wärmespeicher
- 12: Brennstoffzelle
- 13: Wasserstoffteilstrom
- 14: Brennstoffzellenabgas
- 15: Abhitzekessel
- 16: Dampfturbine
- 17: Generator
- 18: Anzapfdampfleitung
- 19: Gasvorwärmer

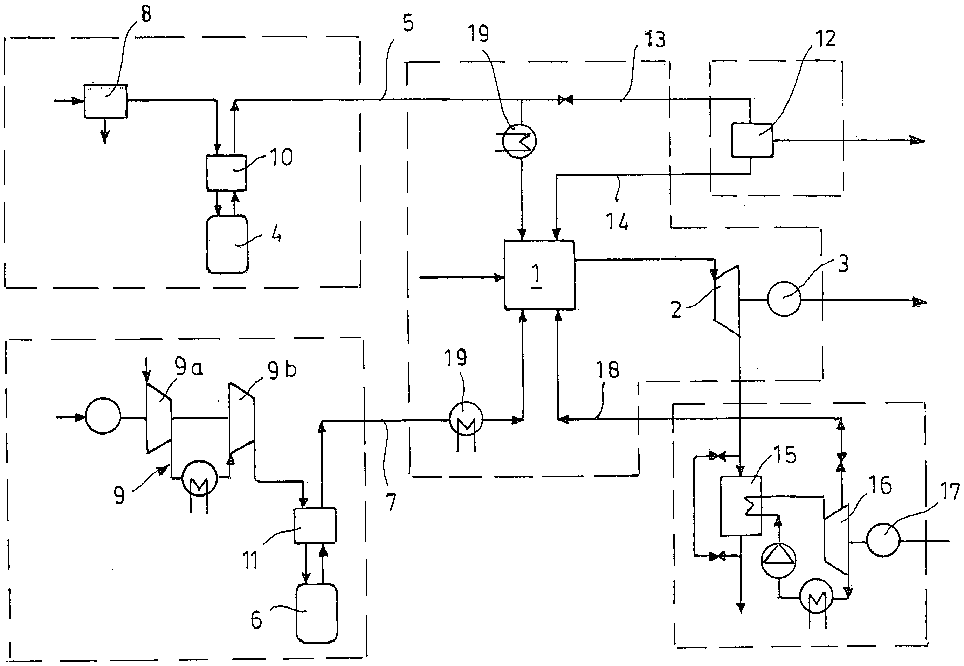

## Patentansprüche

1. Verfahren zur Ein- und Ausspeicherung von Energie unter Ausnutzung von zeitweise in einem Energieversorgungsnetz die Nachfrage übersteigenden, volatilen Energiepotentialen, umfassend die vorzugsweise adiabatische Verdichtung von Luft, die Speicherung der verdichteten Luft sowie den Betrieb einer Gasturbine als Verbrennungskraftmaschine unter Entnahme von Luft aus dem Speicher und unter Verwendung wenigstens eines gasförmigen Brennstoffs für die Gasturbine, **dadurch gekennzeichnet, dass** als ein gasförmiger Brennstoff Wasserstoff verwendet wird.

2. Verfahren nach Anspruch 1, umfassend eine Elektrolyse von Wasserstoff als Brennstoff für die Gasturbine.

3. Verfahren nach Anspruch 2, umfassend eine vorzugsweise adiabatische Speicherung von Wasserstoff, vorzugsweise unter Verwendung einer Speicherkaverne.

4. Verfahren nach Anspruch 3, **dadurch gekennzeichnet, dass** die Speicherung von Wasserstoff unter Nutzung der bei der Elektrolyse und/oder Speicherung des Wasserstoffs anfallenden thermischen Energie erfolgt.

5. Verfahren nach einem der Ansprüche 3 oder 4, **gekennzeichnet durch** eine lastabhängige parallele Entnahme von Druckluft und Wasserstoff aus den jeweiligen Speichern.

6. Verfahren nach einem der Ansprüche 1 bis 5, **dadurch gekennzeichnet, dass** die Abhitze der Gasturbine vorzugsweise zur Stromerzeugung mittels eines der Gasturbine nachgeschalteten Wasser-/Dampfkreislaufs mit Dampfturbine genutzt wird.

7. Verfahren nach einem der Ansprüche 1 bis 6, **gekennzeichnet durch** den parallelen Betrieb einer Brennstoffzelle oder einer Anordnung von Brennstoffzellen unter wenigstens teilweise Nutzung des elektrolytisch erzeugten Wasserstoffs.

8. Verfahren nach Anspruch 7, **dadurch gekennzeichnet, dass** das Brennstoffzellenabgas einer Brennkammer der Gasturbine zugeführt wird und dort als Reaktionspartner der Luft lastabhängig wenigstens teilweise den Wasserstoff substituiert.

9. Verfahren nach einem der Ansprüche 2 bis 8, **dadurch gekennzeichnet, dass** der bei der Elektrolyse anfallende Sauerstoff der Brennkammer der Gasturbine zugeführt wird.

10. Verfahren nach Anspruch 6, **dadurch gekennzeichnet, dass** der Dampfturbine Abzapfdampf entnommen und der Gasturbine zugeführt wird.

11. Gasturbinenspeicherkraftwerk, vorzugsweise zur Durchführung des Verfahrens nach einem der Ansprüche 1 bis 10, mit wenigstens einer Gasturbine als Verbrennungskraftmaschine, umfassend wenigstens eine Brennkammer (1) sowie wenigstens eine der Brennkammern (1) nachgeschaltete Entspannungsturbine (2) mit wenigstens einem Druckluftspeicher und Mitteln zur Verdichtung und Einspeicherung von Luft in dem Druckluftspeicher sowie wenigstens einer Druckluftspeiseleitung (7) von dem Druckluftspeicher an die Gasturbine, **gekennzeichnet durch** wenigstens einen Wasserstoffspeicher und wenigstens eine Wasserstoffspeiseleitung (5) zu der Gasturbine, wobei die Druckluftspeiseleitung (7) und die Wasserstoffspeiseleitung (5) eine parallele Zufuhr von Wasserstoff und Druckluft an die Gasturbine ermöglichen.

12. Gasturbinenspeicherkraftwerk nach Anspruch 11, **gekennzeichnet durch** eine Einrichtung zur Elektrolyse von Wasserstoff.

13. Gasturbinenspeicherkraftwerk nach einem der Ansprüche 11 oder 12, **dadurch gekennzeichnet, dass** der Wasserstoffspeicher als Speicherkaverne (4) ausgebildet ist.

14. Gasturbinenspeicherkraftwerk nach einem der Ansprüche 11 bis 13, **dadurch gekennzeichnet, dass** dem Wasserstoffspeicher wenigstens ein rekuperativer Wärmespeicher (10) vorgeschaltet ist.

15. Gasturbinenspeicherkraftwerk nach einem der Ansprüche 11 bis 14, **dadurch gekennzeichnet, dass** die Gasturbine keinen Verdichterteil umfasst.

16. Gasturbinenspeicherkraftwerk nach einem der Ansprüche 11 bis 15, **dadurch gekennzeichnet, dass** die Gasturbine mit einem Wasser-/Dampfkreislauf eines Abhitzekessels (15) thermisch gekoppelt ist.

17. Gasturbinenspeicherkraftwerk nach einem der Ansprüche 11 bis 16, **dadurch gekennzeichnet, dass** der Gasturbine wenigstens eine Brennstoffzelle (12) vorgeschaltet ist.

18. Gasturbinenspeicherkraftwerk nach einem der Ansprüche 11 bis 17, **gekennzeichnet durch** wenigstens einen Sauerstoffspeicher zur Ein- und Ausspeicherung des bei der Elektrolyse anfallenden Sauerstoffs, wobei der Sauerstoffspeicher vorzugsweise als Druckspeicher ausgebildet ist.

19. Gasturbinenspeicherkraftwerk nach Anspruch 18, **dadurch gekennzeichnet, dass** dem Sauerstoffspeicher wenigstens ein rekuperativer Wärmetauscher vorgeschaltet ist.

20. Gasturbinenspeicherkraftwerk nach einem der Ansprüche 11 bis 19, **dadurch gekennzeichnet, dass** wenigstens ein Gas-Gas-Wärmetauscher zur Vorwärmung von Druckluft und/oder Wasserstoff vorgesehen ist, der mit Gasturbinenabgas als Wärmeträgermedium beaufschlagt ist.

21. Gasturbinenspeicherkraftwerk nach einem der Ansprüche 11 bis 20, **dadurch gekennzeichnet, dass** der Gasturbine wenigstens ein Abgasverdichter nachgeschaltet ist, der über eine Abgasrückführung an die Brennkammer (1) der Gasturbine angeschlossen ist.
